# EUROPEAN PATENT SPECIFICATION

(11) **EP 3 249 339 B1**
(45) Date of publication and mention of the grant of the patent: **07.04.2021**
(21) Application number: 16740054.8
(22) Date of filing: 14.01.2016
(51) Int. Cl.: F28F 9/26, F28F 1/32, F28D 1/047, F24F 1/14, F28F 19/06, F28F 9/02, F28F 1/02, F28D 1/053, F24F 1/18, B23K 1/00, F28F 9/013, F28F 21/08

(54) **AIR CONDITIONING DEVICE**
KLIMATISIERUNGSVORRICHTUNG
DISPOSITIF DE CONDITIONNEMENT D'AIR

(30) Priority: 19.01.2015 JP 2015008125
(43) Date of publication of application: 29.11.2017
(73) Proprietor: Daikin Industries, Ltd., Osaka-shi, Osaka 530-8323 (JP)
(72) Inventor: JINDOU, Masanori, Osaka-shi, Osaka 530-8323 (JP); ORITANI, Yoshio, Osaka-shi, Osaka 530-8323 (JP); KAZUSA, Takuya, Osaka-shi, Osaka 530-8323 (JP); MORIMOTO, Kousuke, Osaka-shi, Osaka 530-8323 (JP); HAMADATE, Junichi, Osaka-shi, Osaka 530-8323 (JP); SAKAMAKI, Tomohiko, Osaka-shi, Osaka 530-8323 (JP)
(74) Representative: Hoffmann Eitle
(86) International application number: PCT/JP2016/050981
(87) International publication number: WO 2016/117447

(56) References cited:
- WO-A1-2012/164828
- DE-A1-102010 001 543
- JP-A- H02 263 566
- JP-A- H06 182 539
- JP-A- 2006 145 060
- JP-A- 2007 192 496
- JP-A- 2012 163 319
- JP-A- 2013 002 682
- JP-A- 2014 052 091
- JP-B2- H0 722 819
- JP-U- H0 712 771
- US-A1- 2010 112 370
- US-A1- 2013 306 285
- US-A1- 2014 096 943

## Description

### TECHNICAL FIELD

The present invention relates to an air conditioner.

### BACKGROUND ART

Conventionally, air conditioner where pipes made of aluminum or aluminum alloy are plurally provided in a heat exchanger, for example, have been used.

For example, JP 2012-163319 A discloses a heat exchanger where a header, flat tubes, and fins are configured by aluminum or aluminum alloy. In this heat exchanger, the inside of the header is partitioned into plural spaces, and plural intercommunicating pipes are provided to intercommunicate the partitioned spaces. Here, the intercommunicating pipes are connected to the header in such a way as to interconnect one space below and one space above inside the header. Here, the intercommunicating pipes connected to the header are plurally provided for each flow path inside the header. Another air conditioner is disclosed in US 2013/306285 A1 forming the basis for the preamble of claim 1.

### SUMMARY OF INVENTION

### <Technical Problem>

The plural intercommunicating pipes of the heat exchanger disclosed in patent document 1 are disposed an interval apart from each other. For this reason, the space for installing the plural intercommunicating pipes needs to be wide. In particular, the greater the number of intercommunicating pipes becomes, the larger the space that becomes needed in this ways ends up becoming.

Here, in a case where the intercommunicating pipes are disposed with a narrow interval between them, the installation space can be reduced but there is the concern that water will end up being retained between the intercommunicating pipes and there is the concern that this will end up promoting galvanic corrosion. In particular, such water retention and galvanic corrosion tend to become marked in sections where outer peripheral curved surface sections of cylindrical pipes are in close proximity to each other.

Furthermore, in a case where the intercommunicating pipes end up rubbing against each other, damage to the surfaces of the pipes ends up occurring. This rubbing of the pipes against each other also tends to become marked because it repeatedly occurs in sections where the curved surface sections of the cylindrical pipes are in close proximity to each other.

The present invention has been made in view of the aforementioned points, and it is a problem of the present invention to provide an air conditioner capable of controlling corrosion by making it difficult for water to be retained while preventing cylindrical pipes from rubbing against each other.

### <Solution to Problem>

An air conditioner pertaining to the invention includes the features of claim 1.

This air conditioner includes the plural cylindrical pipes, and the plural cylindrical pipes are brazed to each other. For this reason, it becomes possible to prevent the plural cylindrical pipes from rubbing against each other, and the occurrence of corrosion preferentially from the rubbing sections can also be controlled. Furthermore, between the plural cylindrical pipes, a brazing filler metal is positioned between the cylinder-shaped sections, so it is difficult for water to be retained between the plural cylindrical pipes. Because of this, it is possible to control corrosion by making it difficult for water to be retained while preventing the cylindrical pipes from rubbing against each other. Further, in this air conditioner, each of the cylindrical pipes is provided in such a way as to extend out from a given space among the spaces vertically plurally divided inside the header, extend in the same direction as the other cylindrical pipes, and thereafter return to another space in the header. For this reason, the plural cylindrical pipes become disposed in positions in close proximity to each other. Even in a case such as this, in this air conditioner, by integrating the plural cylindrical pipes by means of brazing, it is possible to make it difficult for water to be retained while preventing the cylindrical pipes from rubbing against each other.

An air conditioner pertaining to a second aspect is the air conditioner pertaining to the first aspect, wherein at least three or more of the cylindrical pipes are brazed to each other.

Here, in the case of disposing three or more of the cylindrical pipes, the installation space ends up increasing if one tries to avoid damage caused by the cylindrical pipes rubbing against each other.

To address this, in this air conditioner, the three or more cylindrical pipes are brazed to each other, so not only can the cylindrical pipes be kept from rubbing against each other, but it is also possible to effectively control an increase in the installation space.

An air conditioner pertaining to a third aspect is the air conditioner pertaining to any of the first aspect to the second aspect, wherein a film functioning as a sacrificial material and as a brazing filler metal is provided on outer surfaces of the cylindrical pipes.

In this air conditioner, it is easy to supply the brazing filler metal to the joint sections and it also becomes possible to enhance corrosion resistance.

### <Advantageous Effects of Invention>

In the air conditioner pertaining to the first aspect, it is possible to control corrosion by making it difficult for water to be retained while preventing the cylindrical pipes from rubbing against each other. Further, even in a case where the plural cylindrical pipes are disposed in positions in close proximity to each other, it is possible to make it difficult for water to be retained while preventing the cylindrical pipes from rubbing against each other.

In the air conditioner pertaining to the second aspect, not only can the cylindrical pipes be kept from rubbing against each other, but it is also possible to effectively control an increase in the installation space.

In the air conditioner pertaining to the third aspect, it is easy to supply the brazing filler metal to the joint sections and it also becomes possible to enhance corrosion resistance.

### BRIEF DESCRIPTION OF DRAWINGS

FIG. 1 is a circuit diagram for describing an overview of a configuration of an air conditioner pertaining to an embodiment.
FIG. 2 is a perspective view showing the exterior of an air conditioning outdoor unit.
FIG. 3 is a general top sectional view describing the dispositions of various devices in the air conditioning outdoor unit.
FIG. 4 is a general external perspective view showing an outdoor heat exchanger.
FIG. 5 is a side view showing a state in which heat transfer fins are attached to multi-hole flat tubes in the outdoor heat exchanger.
FIG. 6 is an exploded general perspective view of a return header and an intercommunicating component.
FIG. 7 is a front view showing an example where intercommunicating pipes are bundled together by a bundling component.
FIG. 8 is an external perspective view showing an example where the intercommunicating pipes are bundled together by the bundling component (a view seen from the return header side).
FIG. 9 is an external perspective view showing an example where the intercommunicating pipes are bundled together by the bundling component (a view seen from the front and below).
FIG. 10 is an external perspective view showing an example where the intercommunicating pipes are bundled together by the bundling component (a view seen from the back and below).
FIG. 11 is a plan view of a band member.
FIG. 12 is a side view of a clip.
FIG. 13 is a flowchart of brazing and securing of the plural intercommunicating pipes and the bundling component 9 to each other.
FIG. 14 is a cross-sectional view, along plane X-X of FIG. 7, showing a state in which the clip and the plural intercommunicating pipes are brazed and secured to each other.

### DESCRIPTION OF EMBODIMENT

An air conditioner 1 equipped with a heat exchanger pertaining to an embodiment of the present invention will be described below with reference to the drawings.

### (1) Overall Configuration of Air conditioner 1

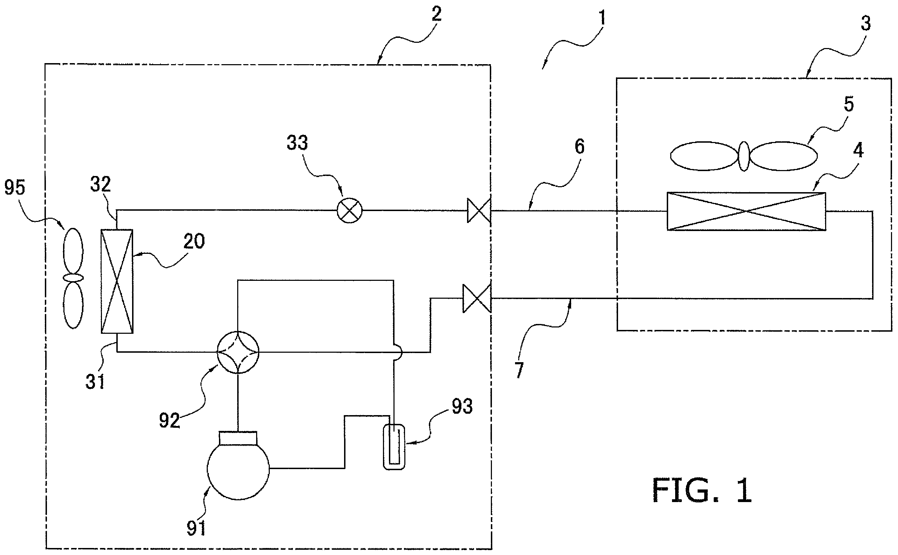

FIG. 1 is a circuit diagram showing an overview of the configuration of the air conditioner 1 pertaining to the embodiment of the present invention.

The air conditioner 1 is a system used to cool and heat the inside of a building in which an air conditioning indoor unit 3 is installed by performing a vapor compression refrigeration cycle operation, and is configured as a result of an air conditioning outdoor unit 2 serving as a heat source-side unit and an air conditioning indoor unit 3 serving as a utilization-side unit being interconnected by refrigerant intercommunicating pipes 6 and 7.

A refrigerant circuit configured as a result of the air conditioning outdoor unit 2, the air conditioning indoor unit 3, and the refrigerant intercommunicating pipes 6 and 7 being interconnected is configured as a result of a compressor 91, a four-way switching valve 92, an outdoor heat exchanger 20 (heat exchanger), an expansion valve 33, an indoor heat exchanger 4, and an accumulator 93 being interconnected by refrigerant pipes. The refrigerant circuit is charged with refrigerant, and a refrigeration cycle operation wherein the refrigerant is compressed, is cooled, has its pressure reduced, is heated and evaporated, and thereafter is again compressed take place. As the refrigerant, a refrigerant selected from R410A, R32, R407C, R22, R134a, and carbon dioxide, for example, is used.

### (2) Detailed Configuration of Air Conditioner 1

### (2-1) Air Conditioning Indoor Unit 3

The air conditioning indoor unit 3 is installed, for example, by being mounted on a wall surface in a room or by being embedded in or suspended from a ceiling in a room of a building or the like. The air conditioning indoor unit 3 has the indoor heat exchanger 4 and an indoor fan 5. The indoor heat exchanger 4 is, for example, a cross fin-type fin and tube heat exchanger configured by heat transfer tubes and numerous fins, and is a heat exchanger which, during the cooling operation, functions as a refrigerant evaporator to cool the room air and which, during the heating operation, functions as a refrigerant condenser to heat the room air.

### (2-2) Air Conditioning Outdoor Unit 2

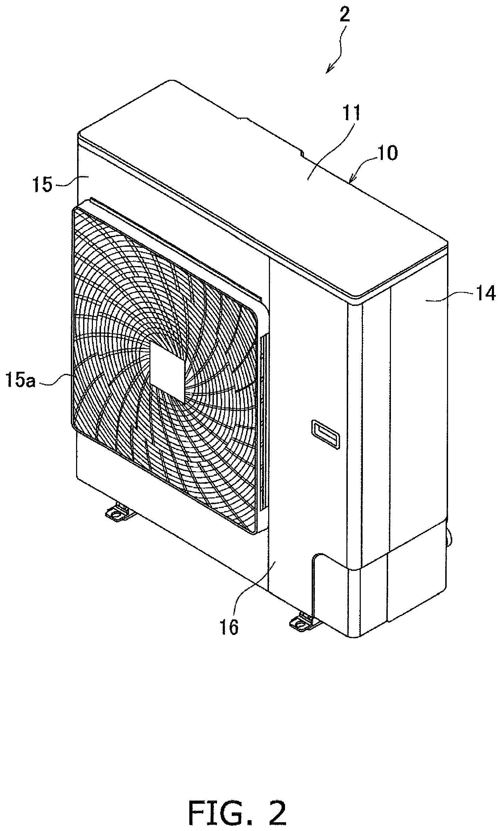

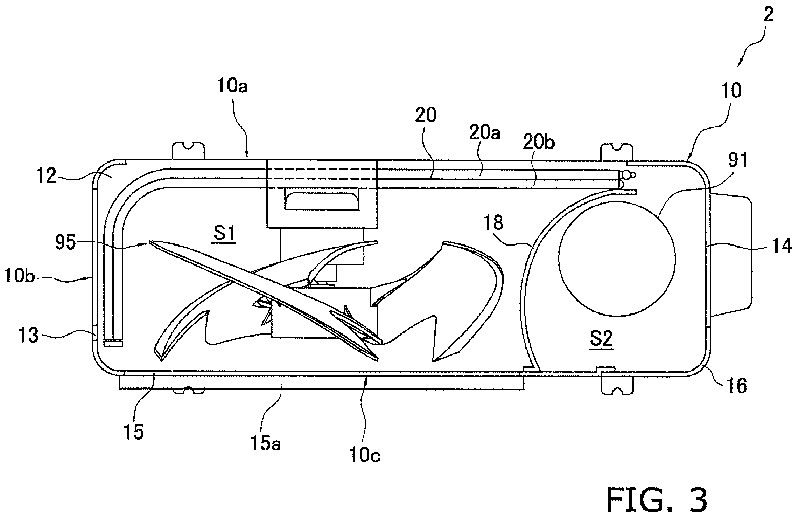

The air conditioning outdoor unit 2 is installed outside the building or the like and is connected to the air conditioning indoor unit 3 via the refrigerant intercommunicating pipes 6 and 7. As shown in FIG. 2 and FIG. 3, the air conditioning outdoor unit 2 has a unit casing 10 that is substantially cuboidal in shape.

As shown in FIG. 3, the air conditioning outdoor unit 2 has a structure (a so-called trunk structure) where a blower compartment S1 and a machine compartment S2 are formed as a result of the inside space of the unit casing 10 being divided in two by a partition plate 18 extending in the vertical direction. The air conditioning outdoor unit 2 has the outdoor heat exchanger 20 and an outdoor fan 95 disposed inside the blower compartment S1 of the unit casing 10 and has the compressor 91, the four-way switching valve 92, the accumulator 93, the expansion valve 33, a gas refrigerant pipe 31, and a liquid refrigerant pipe 32 disposed inside the machine compartment S2 of the unit casing 10.

The unit casing 10 is equipped with a bottom plate 12, a top plate 11, a blower compartment-side side plate 13, a machine compartment-side side plate 14, a blower compartment-side front plate 15, and a machine compartment-side front plate 16 to configure a casing.

The air conditioning outdoor unit 2 is configured to suck outdoor air into the blower compartment S1 located inside the unit casing 10 from the back surface and one of the side surfaces of the unit casing 10 and thereafter blow out the sucked-in outdoor air from the front surface of the unit casing 10. Specifically, an air inlet 10a, an air inlet 10b, and an air outlet 10c are formed with respect to the blower compartment S1 located inside the unit casing 10. The air inlet 10a and the air inlet 10b overall extend from the front surface-side end portion of the blower compartment-side side plate 13 to the blower compartment S1-side end portion of the machine compartment-side side plate 14. Furthermore, the air outlet 10c is provided in the blower compartment-side front plate 15, and its front side is covered by a fan grille 15a.

The four-way switching valve 92 is a mechanism for switching the direction of the flow of the refrigerant. During the cooling operation the four-way switching valve 92 interconnects a refrigerant pipe on the discharge side of the compressor 91 and the gas refrigerant pipe 31 extending from one end (the gas-side end portion) of the outdoor heat exchanger 20 and also interconnects, via the accumulator 93, the refrigerant intercommunicating pipe 7 for gas refrigerant and a refrigerant pipe on the suction side of the compressor 91 (see the solid lines of the four-way switching valve 92 in FIG. 1). Furthermore, during the heating operation the four-way switching valve 92 interconnects the refrigerant pipe on the discharge side of the compressor 91 and the refrigerant intercommunicating pipe 7 for gas refrigerant and also interconnects, via the accumulator 93, the suction side of the compressor 91 and the gas refrigerant pipe 31 extending from the one end (the gas-side end portion) of the outdoor heat exchanger 20 (see the dashed lines of the four-way switching valve 92 in FIG. 1).

The outdoor heat exchanger 20 is disposed standing up in the up and down direction (vertical direction) so as to oppose the air inlets 10a and 10b in the blower compartment S1. The outdoor heat exchanger 20 is a heat exchanger made of aluminum, and in the present embodiment a heat exchanger having a design pressure of about 3 MPa to 4 MPa is used. The gas refrigerant pipe 31 extends from the one end (the gas-side end portion) of the outdoor heat exchanger 20 so as to be connected to the four-way switching valve 92. Furthermore, the liquid refrigerant pipe 32 extends from the other end (the liquid-side end portion) of the outdoor heat exchanger 20 so as to be connected to the expansion valve 33.

The accumulator 93 is connected between the four-way switching valve 92 and the compressor 91. The accumulator 93 has a gas/liquid separating function of separating the refrigerant into its gas phase and its liquid phase. The refrigerant flowing into the accumulator 93 is separated into its liquid phase and its gas phase, and the gas-phase refrigerant that collects in the upper space is supplied to the compressor 91.

The expansion valve 33 is a mechanism for reducing the pressure of the refrigerant in the refrigerant circuit, and is an electrically powered valve whose opening degree is adjustable. The expansion valve 33 is provided between the outdoor heat exchanger 20 and the refrigerant intercommunicating pipe 6 for liquid refrigerant in order to adjust the refrigerant pressure and the refrigerant flow rate and has the function of causing the refrigerant to expand both during the cooling operation and during the heating operation.

The outdoor fan 95 supplies, to the outdoor heat exchanger 20, outdoor air for exchanging heat with the refrigerant flowing in the outdoor heat exchanger 20. The outdoor fan 95 is disposed in the blower compartment S1 so as to oppose the outdoor heat exchanger 20. The outdoor fan 95 sucks the outdoor air into the unit from the back surface side, causes heat exchange to take place between the refrigerant and the outdoor air in the outdoor heat exchanger 20, and thereafter discharges the air after heat exchange to the outside of the unit from the front surface side.

### (3) Operation of Air Conditioner 1

### (3-1) Cooling Operation

During the cooling operation the four-way switching valve 92 is in the state indicated by the solid lines in FIG. 1, namely, a state where the discharge side of the compressor 91 is connected via the gas refrigerant pipe 31 to the gas side of the outdoor heat exchanger 20 and where the suction side of the compressor 91 is connected via the accumulator 93 and the refrigerant intercommunicating pipe 7 to the gas side of the indoor heat exchanger 4. The opening degree of the expansion valve 33 is adjusted so that the degree of superheating of the refrigerant in the outlet of the indoor heat exchanger 4 (that is, the gas side of the indoor heat exchanger 4) becomes fixed (degree of superheating control). When the compressor 91, the outdoor fan 95, and the indoor fan 5 are operated in this state of the refrigerant circuit, low-pressure gas refrigerant is compressed by the compressor 91 to become high-pressure gas refrigerant. The high-pressure gas refrigerant is sent via the four-way switching valve 92 to the outdoor heat exchanger 20. Thereafter, the high-pressure gas refrigerant exchanges heat with the outdoor air supplied by the outdoor fan 95, condenses, and becomes high-pressure liquid refrigerant in the outdoor heat exchanger 20. Then, the high-pressure liquid refrigerant that has reached a supercooled state is sent from the outdoor heat exchanger 20 to the expansion valve 33. The refrigerant whose pressure has been reduced close to the suction pressure of the compressor 91 by the expansion valve 33 to become refrigerant in a low-pressure gas-liquid two-phase state is sent to the indoor heat exchanger 4, exchanges heat with the room air, evaporates, and becomes low-pressure gas refrigerant in the indoor heat exchanger 4.

The low-pressure gas refrigerant is sent via the refrigerant intercommunicating pipe 7 to the air conditioning outdoor unit 2 and is sucked back into the compressor 91. In this way, in the cooling operation the air conditioner 1 causes the outdoor heat exchanger 20 to function as a condenser of the refrigerant compressed in the compressor 91 and causes the indoor heat exchanger 4 to function as an evaporator of the refrigerant condensed in the outdoor heat exchanger 20.

### (3-2) Heating Operation

During the heating operation the four-way switching valve 92 is in the state indicated by the dashed lines in FIG. 1, namely, a state where the discharge side of the compressor 91 is connected via the refrigerant intercommunicating pipe 7 to the gas side of the indoor heat exchanger 4 and where the suction side of the compressor 91 is connected via the gas refrigerant pipe 31 to the gas side of the outdoor heat exchanger 20. The opening degree of the expansion valve 33 is adjusted so that the degree of supercooling of the refrigerant in the outlet of the indoor heat exchanger 4 becomes fixed at a degree of supercooling target value (degree of supercooling control). When the compressor 91, the outdoor fan 95, and the indoor fan 5 are operated in this state of the refrigerant circuit, low-pressure gas refrigerant is sucked into the compressor 91, compressed, becomes high-pressure gas refrigerant, and is sent via the four-way switching valve 92 and the refrigerant intercommunicating pipe 7 to the air conditioning indoor unit 3.

Then, the high-pressure gas refrigerant that has been sent to the air conditioning indoor unit 3 exchanges heat with the room air, condenses, and becomes high-pressure liquid refrigerant in the indoor heat exchanger 4, and thereafter has its pressure reduced in accordance with the valve opening degree of the expansion valve 33 when the refrigerant passes through the expansion valve 33. The refrigerant that has passed through the expansion valve 33 flows into the outdoor heat exchanger 20. Then, the refrigerant in the low-pressure gas-liquid two-phase state that has flowed into the outdoor heat exchanger 20 exchanges heat with the outdoor air supplied by the outdoor fan 95, evaporates, becomes low-pressure gas refrigerant, and is sucked back into the compressor 91 via the four-way switching valve 92. In this way, in the heating operation the air conditioner 1 causes the indoor heat exchanger 4 to function as a condenser of the refrigerant compressed in the compressor 91 and causes the outdoor heat exchanger 20 to function as an evaporator of the refrigerant condensed in the indoor heat exchanger 4.

### (4) Detailed Configuration of Outdoor Heat Exchanger 20

### (4-1) Overall Configuration of Outdoor Heat Exchanger 20

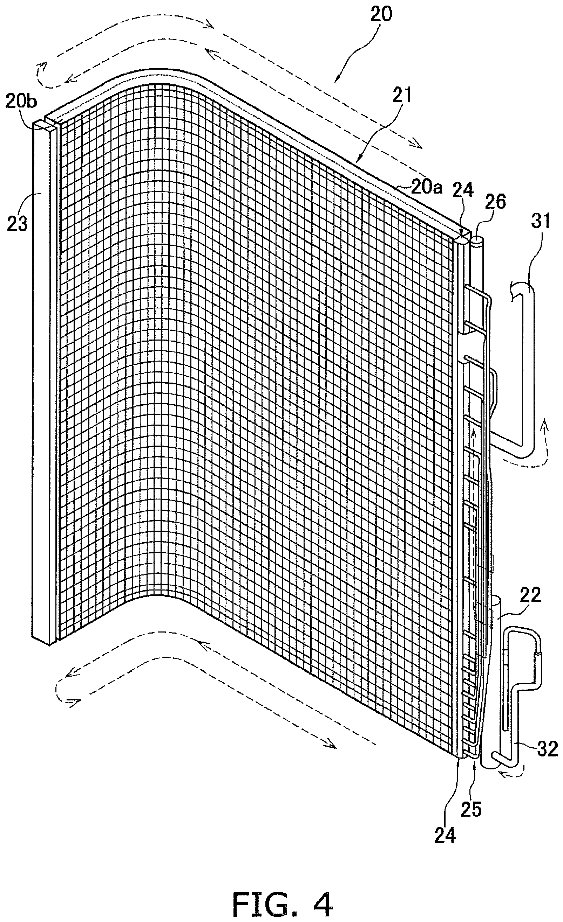

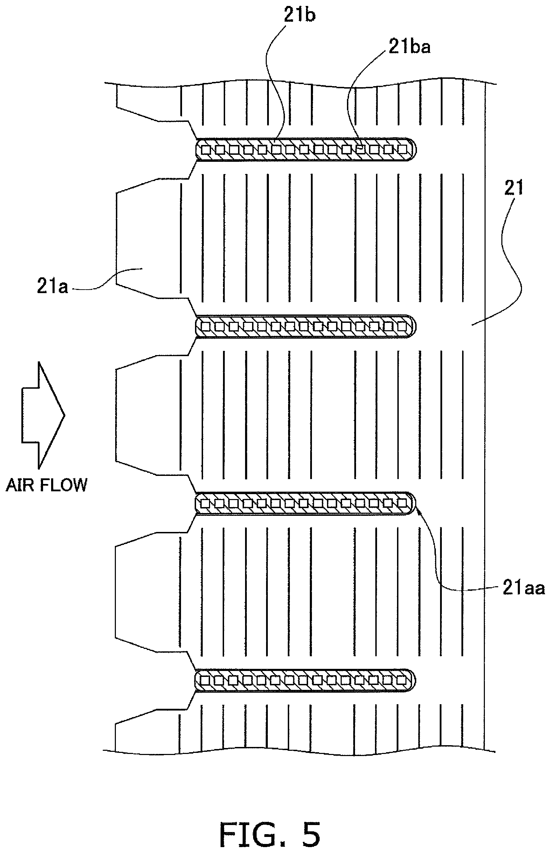

FIG. 4 is a general external perspective view of the outdoor heat exchanger 20. Furthermore, FIG. 5 shows a state where heat transfer fins 21a are attached to multi-hole flat tubes 21b.

The outdoor heat exchanger 20 is equipped with a heat exchange component 21 that causes heat exchange to take place between the outdoor air and the refrigerant, an inlet/outlet header tube 26 and a return header 24 provided on one end side of the heat exchange component 21, a coupling header 23 provided on the other end side of the heat exchange component 21, an intercommunicating component 25 that couples the lower portion of the return header 24 and the upper portion of the return header 24 to each other, and a distributor 22 that guides distributed refrigerant to the lower portion of the inlet/outlet header tube 26.

### (4-2) Heat Exchange Component 21

The heat exchange component 21 is configured by numerous heat transfer fins 21a and numerous multi-hole flat tubes 21b. The heat transfer fins 21a and the multi-hole flat tubes 21b are both made of aluminum or aluminum alloy.

As shown in FIG. 5, the heat transfer fins 21a are tabular members, and cutouts 21aa that extend in the horizontal direction and are for inserting the flat tubes are formed in each of the heat transfer fins 21a. The cutouts 21aa are provided in the heat transfer fins 21a in such a way that there are plural cutouts adjacent to each other in the up and down direction. It should be noted that the heat transfer fins 21a are attached in such a way that they have countless sections that project toward the upstream side of the air flow.

The multi-hole flat tubes 21b function as heat transfer tubes and transfer, to the refrigerant flowing inside them, the heat moving between the heat transfer fins 21a and the outdoor air. The multi-hole flat tubes 21b have upper and lower planar portions that become heat transfer surfaces and plural inflow openings 21ba through which the refrigerant flows. The plural inflow openings 21ba in the multi-hole flat tubes 21b are adjacent to each other in the direction of the air flow passing through the outdoor heat exchanger 20. The multi-hole flat tubes 21b having this kind of shape are plurally provided, and these plural tubes are disposed a predetermined interval apart from each other in the vertical direction.

It should be noted that the heat exchange component 21 has, in the direction of the air flow produced by the outdoor fan 95 (a flow heading from the back surface and left side surface sides of the casing to the fan grille 15a located on the front of the casing), an upwind-side heat exchange component 20a provided in such a way as to frame the upwind section and a downwind-side heat exchange component 20b provided in such a way as to frame the downwind side. The upwind-side heat exchange component 20a and the downwind-side heat exchange component 20b are disposed in two rows adjacent to each other in the air flow direction.

The upwind-side heat exchange component 20a has the plural multi-hole flat tubes 21b, which extend in such a way as to frame the upwind side and are adjacent to each other in the up and down direction, and the heat transfer fins 21a, which are secured to the multi-hole flat tubes 21b. Furthermore, the downwind-side heat exchange component 20b also has the plural multi-hole flat tubes 21b, which extend in such a way as to frame the downwind side and are adjacent to each other in the up and down direction, and the heat transfer fins 21a, which are secured to the multi-hole flat tubes 21b.

### (4-3) Distributor 22

The distributor 22 is connected in such a way as to couple the liquid refrigerant pipe 32 and the lower section of the inlet/outlet header tube 26 to each other. When, for example, the outdoor heat exchanger 20 functions as a refrigerant evaporator, the distributor 22 distributes, in its height direction, the refrigerant flowing thereto from the liquid refrigerant pipe 32, and the flows of refrigerant distributed by the distributor 22 are guided via height positions in the lower section of the inlet/outlet header tube 26 to the lower section of the upwind-side heat exchange component 20a (see the dotted lines in FIG. 4).

### (4-4) Inlet/Outlet Header Tube 26

The inlet/outlet header tube 26 is a tubular member that is made of aluminum or aluminum alloy and extends in the vertical direction, and the inside of the inlet/outlet header tube 26 is divided into an upper section and a lower section. Specifically, the inside of the inlet/outlet header tube 26 is vertically partitioned by a baffle extending in the horizontal direction.

The lower section of the inlet/outlet header tube 26 functions as a refrigerant inlet when the outdoor heat exchanger 20 functions as a refrigerant evaporator, and functions as a refrigerant outlet when the outdoor heat exchanger 20 functions as a refrigerant radiator. Furthermore, the upper section of the inlet/outlet header tube 26 functions as a refrigerant outlet when the outdoor heat exchanger 20 functions as a refrigerant evaporator, and functions as a refrigerant inlet when the outdoor heat exchanger 20 functions as a refrigerant radiator.

The lower section of the inlet/outlet header tube 26 is connected via the distributor 22 to the liquid refrigerant pipe 32. The upper section of the inlet/outlet header tube 26 is connected to the gas refrigerant pipe 31.

Furthermore, the lower section of the inlet/outlet header tube 26 has plural spaces vertically adjacent to each other so that the distribution, in the height direction, of the refrigerant distributed by the distributor 22 when the outdoor heat exchanger 20 functions as an evaporator is maintained. These spaces are demarcated as a result of the inside space in the lower section of the inlet/outlet header tube 26 being vertically partitioned by plural baffles. Because of this, the spaces are configured in such a way that the flows of refrigerant that have been divided in the height direction by the distributor 22 can be sent, with their divided state of distribution being maintained, to the heat exchange component 21 via the lower section of the inlet/outlet header tube 26.

Because of the above configuration, in a case where the outdoor heat exchanger 20 functions as a refrigerant evaporator, the refrigerant that has flowed into the heat exchange component 21 via the liquid refrigerant pipe 32, the distributor 22, and the lower section of the inlet/outlet header tube 26 evaporates while passing through each of the members below and reaches the upper section of the inlet/outlet header tube 26. Then, the evaporated refrigerant flows out to the outside of the outdoor heat exchanger 20 via the upper section of the inlet/outlet header tube 26 and the gas refrigerant pipe 31. It should be noted that in a case where the outdoor heat exchanger 20 functions as a refrigerant radiator, the flow becomes the opposite of what is described above.

### (4-5) Coupling Header 23

The coupling header 23 is provided on the opposite side (the blower compartment side in FIG. 3) of the end portion of the heat exchange component 21 on the side (the machine compartment side in FIG. 3) where the inlet/outlet header tube 26 and the return header 24 are provided in the outdoor heat exchanger 20.

The coupling header 23 is configured to guide the refrigerant that has flowed through the multi-hole flat tubes 21b of the upwind-side heat exchange component 20a to the multi-hole flat tubes 21b of the downwind-side heat exchange component 20b located in the same height positions or guide the refrigerant that has flowed through the multi-hole flat tubes 21b of the downwind-side heat exchange component 20b to the multi-hole flat tubes 21b of the upwind-side heat exchange component 20a located in the same height positions. Here, the direction of the flows of refrigerant flowing through the section of the coupling header 23 located in a height position corresponding to the lower section of the inlet/outlet header tube 26 and the direction of the flows of refrigerant flowing through the section of the coupling header 23 located in a height position corresponding to the upper section of the inlet/outlet header tube 26 are mutually opposite directions. Specifically, in a case where the outdoor heat exchanger 20 functions as a refrigerant evaporator, the lower section of the coupling header 23 guides the refrigerant that has flowed through the upwind-side heat exchange component 20a to the downwind-side heat exchange component 20b, and the upper section of the coupling header 23 guides the refrigerant that has flowed through the downwind-side heat exchange component 20b to the upwind-side heat exchange component 20a (see the dotted lines in FIG. 4). In a case where the outdoor heat exchanger 20 functions as a refrigerant radiator, the flows of refrigerant become the opposite of what is described above.

No movement of refrigerant in the up and down direction occurs in the coupling header 23, and the coupling header 23 fulfills the role of simply interconnecting, at the same height positions, flows paths of the refrigerant inside the outdoor heat exchanger 20.

### (4-6) Return Header 24 and Intercommunicating Component 25

The return header 24 is a cylinder-shaped member provided on the end portion of the heat exchange component 21 on the opposite side of the end portion on the side where the coupling header 23 is provided, and extends in the up and down direction further on the downwind side than the inlet/outlet header 26. The return header 24 is connected to the end portion of the downwind-side heat exchange component 20b of the heat exchange component 21 on the opposite side of the coupling header 23 side. The return header 24 is also a member made of aluminum or aluminum alloy.

The intercommunicating component 25 has plural intercommunicating pipes 25a to 25j, which are cylindrical pipes made of aluminum or aluminum alloy connected to the return header 24. The plural intercommunicating pipes 25a to 25j interconnect, in a one to one ratio, lower spaces and upper spaces of the space plurally partitioned inside the return header 24.

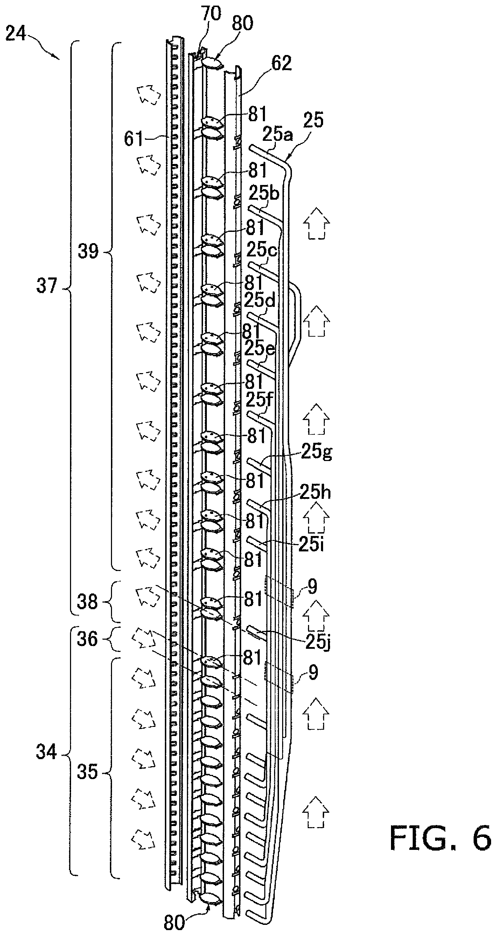

The return header 24 has, as shown in the exploded general perspective view of the return header 24 and the intercommunicating component 25 in FIG. 6, a multi-hole-side member 61 to which one ends of the plural multi-hole flat tubes 21b are connected, a pipe-side member 62 that configures the opposite side of the side to which the multi-hole flat tubes 21b are connected, a partition member 70 that is positioned between the multi-hole-side member 61 and the pipe-side member 62, and plural baffles 80 that vertically partition the space inside the return header 24.

The return header 24 is a structure that is configured by putting together these plural members and is long in the vertical direction. The return header 24 is configured as a result of the members other than the partition member 70 being secured to the partition member 70 that is mainly one part, so it is easy to perform mutual positioning, it is easy to ensure strength, and manufacturing can be facilitated even with a structure that is long in the vertical direction.

The multi-hole-side member 61 configures the wall surface of the return header 24 on the heat exchange component 21 side and is formed in a substantially semicircular arc shape as seen in a top view. The multi-hole-side member 61 has a shape where this semicircular arc shape extends in the up and down direction, and plural openings that penetrate the multi-hole-side member 61 in its thickness direction and are for inserting the multi-hole flat tubes 21b are provided in every height position in the multi-hole-side member 61.

The pipe-side member 62 configures the wall surface on the opposite side of the heat exchange component 21 side out of the wall surfaces of the return header 24 and is formed in a substantially semicircular arc shape as seen in a top view. The pipe-side member 62 has a shape where this semicircular arc shape extends in the up and down direction. Plural openings that penetrate the pipe-side member 62 in its thickness direction and are for inserting the intercommunicating pipes 25a to 25j of the intercommunicating component 25 are provided in every height position in the pipe-side member 62. Furthermore, openings for securing one end sides of the baffles 80 are provided in every height position in the pipe-side member 62.

The partition member 70 extends forward and backward as well as upward and downward in such a way as to partition the space inside the return header 24 into a space on the multi-hole-side member 61 side and a space on the pipe-side member 62 side. Openings for inserting and securing the baffles 80 are provided in every height position in the partition member 70.

As shown in FIG. 6, the inside space of the return header 24 is vertically divided, by an ascending flow forming member 81 provided with nozzles, into a lower return section 34 below and an upper return section 37 above.

The inside space of the lower return section 34 is further vertically divided by a baffle 80 into a first lower return section 35 below and a second lower return section 36 above. It should be noted that the inside of the first lower return section 35 is further partitioned into plural spaces in the up and down direction by plural baffles 80.

The inside space of the upper return section 37 is also further divided in the up and down direction by a baffle 80 into a first upper return section 38 below and a second upper return section 39 above. It should be noted that the inside of the second upper return section 39 is further partitioned into plural spaces in the up and down direction by plural baffles 80. Plural multi-hole flat tubes 21b are connected to each of the spaces partitioned inside the second upper return section 39. An ascending flow forming member 81 provided with nozzles for forming an ascending flow is provided in each of the spaces partitioned inside the second upper return section 39. For this reason, it is possible to deliver the refrigerant to each of the plural multi-hole flat tubes 21b connected at different height positions to each of the spaces partitioned inside the second upper return section 39.

It should be noted that none of the intercommunicating pipes 25a to 25j are connected to the second lower return section 36 or the first upper return section 38, so the refrigerant that has flowed into the second lower return section 36 ascends inside the return header 24 via the ascending flow forming member 81 provided with nozzles and flows out from the first upper return section 38, or the refrigerant that has flowed into the first upper return section 38 descends inside the return header 24 via the ascending flow forming member 81 provided with nozzles and flows out from the second lower return section 36.

The intercommunicating pipes 25a to 25j of the intercommunicating component 25 each vertically interconnect, in a one to one ratio, one of the plural spaces partitioned in the up and down direction by the plural baffles 80 inside the first lower return section 35 and one of the plural spaces partitioned in the up and down direction by the plural baffles 80 inside the second upper return section 39. It should be noted that in the present embodiment the intercommunicating pipe 25a of the intercommunicating component 25 interconnects the uppermost space in the second upper return section 39 and the lowermost space in the first lower return section 35 out of the inside space of the return header 24. Furthermore, the intercommunicating pipe 25b of the intercommunicating component 25 interconnects the second space from the top in the second upper return section 39 and the second space from the bottom in the first lower return section 35 out of the inside space of the return header 24. In this way, the intercommunicating pipes 25a to 25j of the intercommunicating component 25 interconnect the spaces in descending order of intercommunicating distance.

In the state of connection described above, in a case where the outdoor heat exchanger 20 functions as a refrigerant evaporator, the refrigerant that has flowed into the first lower return section 35 via the lower section of the downwind-side heat exchange component 20b of the heat exchange component 21 is sent via the intercommunicating pipes 25a to 25j of the intercommunicating component 25 to the second upper return section 39. Furthermore, the refrigerant that has flowed into the second lower return section 36 from the heat exchange component 21 is sent via the space inside the return header 24, and not via the intercommunicating component 25, to the first upper return section 38. Here, the refrigerant that has been sent to the second upper return section 39 and/or the first upper return section 38 is sent to the upper section of the downwind-side heat exchange component 20b of the heat exchange component 21.

Here, the number of the multi-hole flat tubes 21b connected to the second upper return section 39 is configured to be greater than the number of the multi-hole flat tubes 21b connected to the first lower return section 35. Furthermore, the number of the multi-hole flat tubes 21b connected to the first upper return section 38 is configured to be greater than the number of the multi-hole flat tubes 21b connected to the second lower return section 36.

It should be noted that the refrigerant that flows into the first lower return section 35 via the lower section of the downwind-side heat exchange component 20b of the heat exchange component 21 flows, while maintaining its state of distribution (a state of distribution in which the refrigerant is divided among the plural multi-hole flat tubes 21b vertically adjacent to each other in the lower section of the downwind-side heat exchange component 20b), through each of the spaces vertically partitioned by the baffles 80 inside the first lower return section 35. The refrigerant flowing through each of the spaces inside the first lower return section 35 in this way flows, while maintaining its state of distribution, through the intercommunicating pipes 25a to 25j of the intercommunicating component 25 and flows, while maintaining its state of distribution (a state of distribution in which the refrigerant is divided among the intercommunicating pipes 25a to 25j of the intercommunicating component 25), through each of the spaces vertically partitioned by the baffles 80 inside the second upper return section 39.

### (5) Bundling Together of Intercommunicating Pipes 25a to 25j of Intercommunicating Component 25 by Bundling Components 9

The intercommunicating pipes 25a to 25j of the intercommunicating component 25 are brazed and secured to each other in a state in which they are bundled together by plural bundling components 9, whose general dispositions are indicated by dotted lines in FIG. 6.

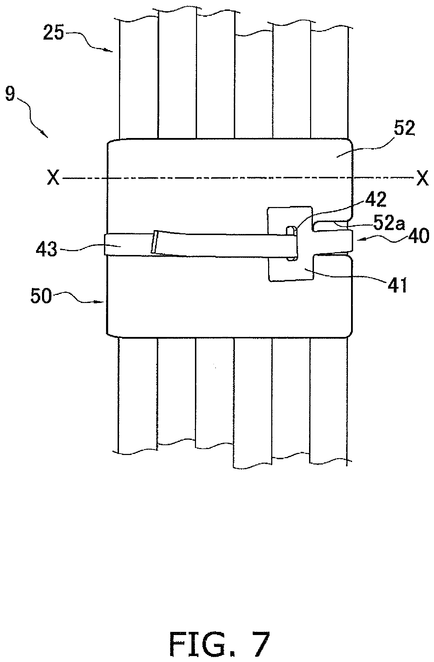

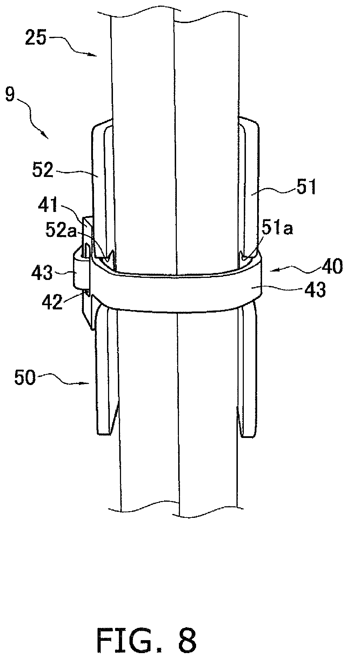

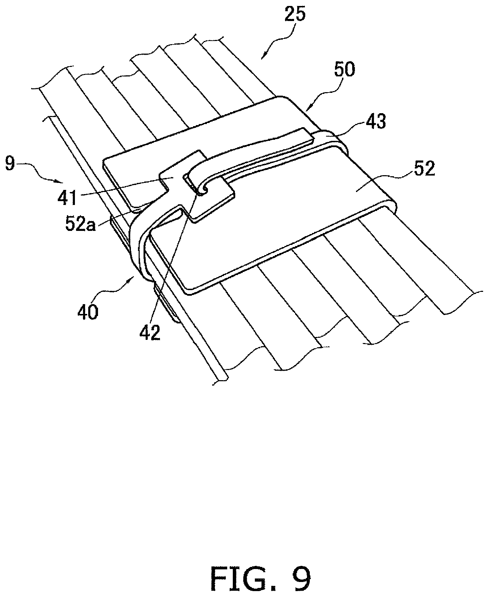

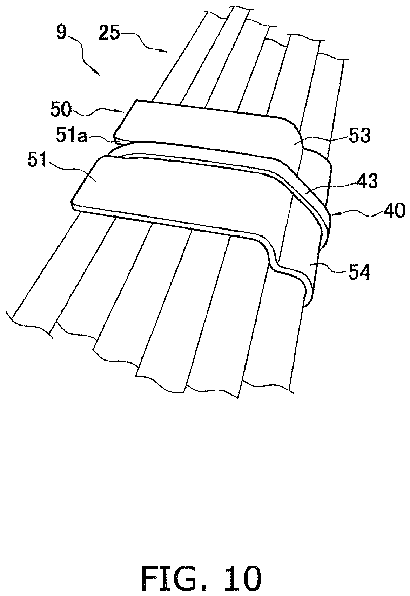

FIG. 7 to FIG. 10 are external perspective views of an example of a place where the intercommunicating pipes 25 are bundled together by the bundling component 9. Here, FIG. 7 is a front view, FIG. 8 is an external perspective view seen from the return header 24 side, FIG. 9 is an external perspective view seen from the front and below, and FIG. 10 is an external perspective view seen from the back and below.

The bundling component 9 is configured by a band member 40 and a clip 50.

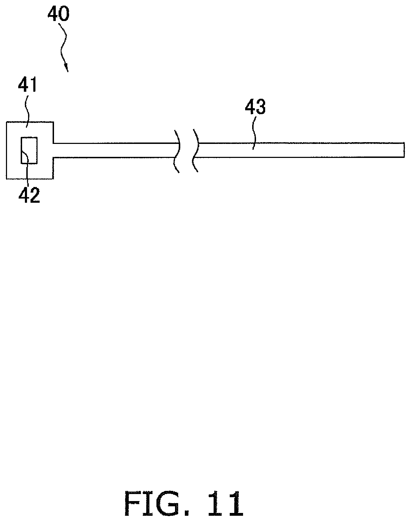

As shown in FIG. 11, which is a plan view, the band member 40 is a member that is made of aluminum or aluminum alloy and has a main body portion 41 and a band portion 43. The main body portion 41 has, on its inner side, an anchoring hole 42 that penetrates the main body portion 41 in its thickness direction. The band portion 43 extends out from part of the main body portion 41 and is formed narrower than the width of the anchoring hole 42 so as to be insertable into the anchoring hole 42. The band portion 43 can be bent by a human hand and has enough rigidity that it is difficult for it to become slack once it has been inserted into the anchoring hole 42 and bent. Furthermore, the rigidity of the band portion 43 is adjusted in such a way that the band portion 43 can sufficiently bundle together and secure the intercommunicating pipes 25 with just one wrap around.

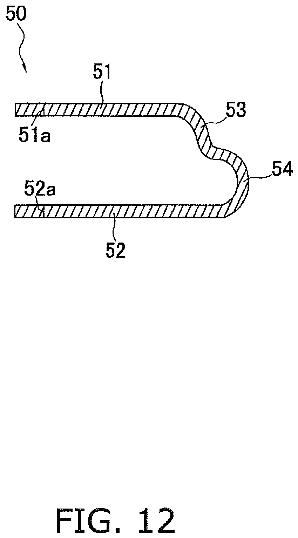

As shown in FIG. 12, which is a side view, the clip 50 is a member that is made of aluminum or aluminum alloy and has a first wall surface portion 51, a second wall surface portion 52, a first curved portion 53, and a second curved portion 54. In the present embodiment, the clip 50 is exemplified by a clip that can accommodate the intercommunicating pipes 25a to 25j, which are cylinder-shapes pipes, in two rows on the first wall surface portion 51 side and the second wall surface portion 52 side. The first wall surface portion 51 and the second wall surface portion 52 are planar sections extending in such a way as to face each other, and can sandwich and hold, in the thickness direction of the intercommunicating pipes 25a to 25j from the radial direction outer sides of the intercommunicating pipes 25a to 25j, the intercommunicating pipes 25a to 25j accommodated inside. Furthermore, the first curved portion 53 is configured to curve in such a way that its inner surface easily follows the outer peripheral surfaces of the intercommunicating pipes 25a to 25j accommodated on one end side of the first wall surface portion 51. The second curved portion 54 is also similarly configured to curve in such a way that its inner surface easily follows the outer peripheral surfaces of the intercommunicating pipes 25a to 25j accommodated on one end side of the second wall surface portion 52. The first curved portion 53 and the second curved portion 54 are continuous with each other via a smoothly curved surface. A first notch 51a for passing the band portion 43 of the band member 40 through is formed in the vicinity of the center of the end portion of the first wall surface portion 51 on the opposite side of the first curved portion 53 side. The width of the first notch 51a is configured to be larger than the width of the band portion 43 of the band member 40 and smaller than the width of the main body portion 41 of the band member 40. Similarly, a second notch 52a for passing the band portion 43 of the band member 40 through is also formed in the vicinity of the center of the end portion of the second wall surface portion 52 on the opposite side of the second curved portion 54 side. The width of the second notch 52a is also configured to be larger than the width of the band portion 43 of the band member 40 and smaller than the width of the main body portion 41 of the band member 40. The cut depth of the first notch 51a and the second notch 52a is shorter than the outer diameter of the intercommunicating pipes 25a to 25j.

### (6) Brazing

A film comprising a coating of clad metal is formed on the outer peripheral surface of each of the intercommunicating pipes 25a to 25j of the intercommunicating component 25. The clad metal is a sacrificial material capable of protecting the outer peripheral surfaces of the intercommunicating pipes 25a to 25j from pitting corrosion and is not particularly limited; for example, an alloy such as aluminum 7072 including a trace amount (e.g., 1% or less) of zinc can be used. Furthermore, the melting point of the clad metal is lower than the melting point of the non-clad-metal sections of the intercommunicating pipes 25a to 25j of the intercommunicating component 25, so the clad metal can also function as a brazing filler metal.

Furthermore, a film comprising a coating of the same clad metal as that on the outer surfaces of the intercommunicating pipes 25a to 25j is also formed on the surface of the clip 50 of the bundling component 9. It should be noted that there is no such coating with clad metal on the band member 40 of the bundling component 9.

In this way, the intercommunicating pipes 25a to 25j whose outer surfaces are coated with the clad metal are brazed in a furnace in a state in which they are bundled together by the bundling component 9 in such a way that they are in tight contact with each other (in such a way that the cylinder-shaped outer peripheral surfaces are in tight contact with each other).

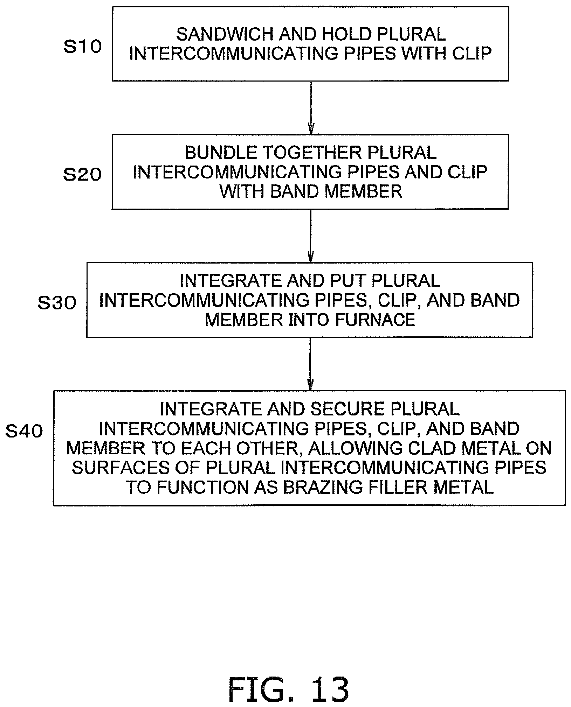

Specifically, the intercommunicating pipes 25a to 25j and the bundling component 9 are integrated and secured to each other by a process according to the flowchart in FIG. 13.

In step S10, the intercommunicating pipes 25a to 25j coated with the clad metal are sandwiched and held, so as to be covered from their radial direction outer sides, by the clip 50 of the bundling component 9.

In step S20, the intercommunicating pipes 25a to 25j and the clip 50 sandwiching and holding them are further bundled together from their radial direction outer sides by the band member 40. Here, the main body portion 41 of the band member 40 is positioned on the outer side of the second wall surface portion 52, and the band portion 43 of the band member 40 is looped around while being passed through the first notch 51a and the second notch 52a in the clip 50. The end portion of the band portion 43 on the opposite side of the main body portion 41 side is passed through the anchoring hole 42 and thereafter folded back to thereby fasten together and position the intercommunicating pipes 25a to 25j and the clip 50.

It should be noted that, here, the section of the clip 50 on the opposite side of the first curved portion 53 and the second curved portion 54 is open. Additionally, because the first notch 51a and the second notch 52a are provided in the clip 50, it is possible for the band portion 43 to contact and follow the outer peripheral curved surfaces of the intercommunicating pipes 25a to 25j positioned in the open section of the clip 50.

In step S30, the plural intercommunicating pipes 25a to 25j, the clip 50, and the band member 40 are put in their integrated state into a furnace.

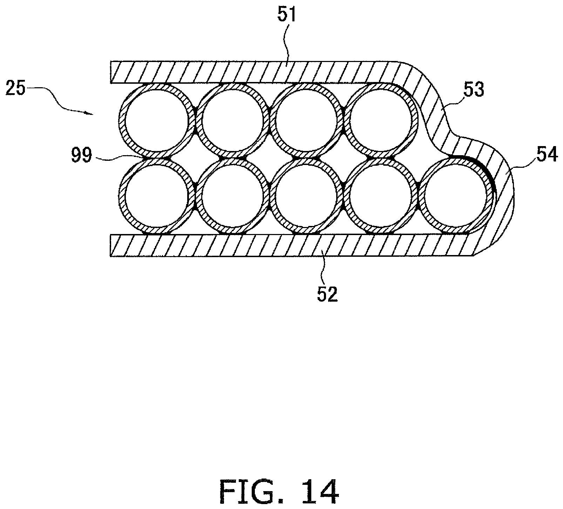

In step S40, the temperature of the furnace is raised to a temperature higher than the melting point of the clad metal on the intercommunicating pipes 25a to 25j and/or the clip 50 and lower than the melting point of the non-clad-metal sections to thereby melt the clad metal and allow it to function as a brazing filler metal. Because of this, some of the clad metal that had been positioned on the surfaces of the intercommunicating pipes 25a to 25j moves to the contacting sections between the outer peripheral curved surfaces of the intercommunicating pipes 25a to 25j and forms fillets 99 as shown in the sectional view of FIG. 14 (a view along section X-X of FIG. 7) to braze and secure the intercommunicating pipes 25a to 25j to each other. Furthermore, some of the clad metal that had been positioned on the surfaces of the intercommunicating pipes 25a to 25j also moves to the contacting sections between the inner surface of the clip 50 and the plural intercommunicating pipes 25a to 25j and forms fillets 99 to braze and secure the clip 50 and the intercommunicating pipes 25a to 25j to each other. Furthermore, the band portion 43 of the band member 40 is brazed and secured to the plural intercommunicating pipes 25a to 25j at the sections where it contacts the outer surfaces of the plural intercommunicating pipes 25a to 25j.

In the way described above, the plural intercommunicating pipes 25a to 25j and the bundling component 9 are brazed and secured to each other.

### (7) Characteristics

In the present embodiment, the plural intercommunicating pipes 25a to 25j are connected to the return header 24. Here, supposing that the intercommunicating pipes 25a to 25j are disposed with a wide interval between them so that water such as dew condensation and rainwater is not retained between the intercommunicating pipes 25a to 25j, the space required for installation ends up needing to be wide. This problem becomes more apparent the more spaces partitioned inside the return header 24 there are and the greater the number of intercommunicating pipes 25a to 25j there are.

To address this, in the air conditioner 1 of the present embodiment, the plural intercommunicating pipes 25a to 25j are disposed in tight contact with each other. Because of this, it is possible to control an increase in the space required for installation. In particular, in the present embodiment, the effect of reducing the installation space is marked because three or more of the intercommunicating pipes are in tight contact with and secured to each other.

Moreover, the outer peripheral curved surfaces of the intercommunicating pipes 25a to 25j are brazed and secured to each other, so relative movement thereof is regulated. Consequently, compared to a case where the intercommunicating pipes 25a to 25j are simply tied together without being brazed to each other, the outer peripheral curved surfaces can be kept from rubbing against each other by regulating the relative movement of the intercommunicating pipes 25a to 25j, and it is also possible to avoid a situation where corrosion ends up being promoted by the intercommunicating pipes rubbing against each other.

Furthermore, as shown in FIG. 14, the fillets 99 configured from the brazing filler metal are present between the outer peripheral curved surfaces of the intercommunicating pipes 25a to 25j, so even in a case where the curved surfaces are in close proximity to each other, it is difficult for water to be retained between the intercommunicating pipes 25a to 25j. Because of this, it becomes possible to control galvanic corrosion. It should be noted that it is also possible to improve water drainage because it is difficult for water to be retained between the intercommunicating pipes 25a to 25j.

It should be noted that, in the present embodiment, particularly the tight securing of the pipes is implemented in the plural intercommunicating pipes 25a to 25j of the intercommunicating component 25. The intercommunicating pipes 25a to 25j are all provided in such a way as to extend out from the lower section of the return header 24 extending in the up and down direction and return to the upper section of the same return header 24. Consequently, the positions through which the intercommunicating pipes 25a to 25j tend to pass are in particularly close proximity. In the present embodiment, by integrating, by means of brazing, pipes passing through positions in close proximity to each other and not pipes passing through positions distant from each other in this way, it is possible to enhance even more the effect of making it difficult for water to be retained while preventing the pipes from rubbing against each other.

Furthermore, the fillets 99 formed between the each intercommunicating pipes 25a to 25j function as a sacrificial material, so supposing that galvanic corrosion were to arise, the sections of the fillets 99 would dissolve prior to the base metal (the non-clad-metal sections of the surfaces) of the plural intercommunicating pipes 25a to 25j. Consequently, it is possible to lengthen the life of the intercommunicating pipes 25a to 25j.

It should be noted that because the intercommunicating pipes 25a to 25j of the present embodiment are put into a furnace in a state in which the intercommunicating pipes 25a to 25j are bundled together by the bundling component 9 and in tight contact with each other, it is easy to guide the clad metal functioning as a brazing filler metal to the tightly contacting sections, and the reliability of the securing can be enhanced.

### (8) Example Modifications

### (8-1) Example Modification A

In the embodiment, a case where the plural intercommunicating pipes 25a to 25j are brazed and secured to each other in a state in which they are bundled together by the bundling component 9 was taken as an example and described.

However, it suffices for plural cylindrical pipes that become brazing targets to be brazed and secured to each other, and it is not necessary for the bundling component 9 to be integrated with them as the final secured object. For example, in-furnace brazing may be performed in a state in which plural cylindrical pipes have been brought into tight contact with each other using a tool capable of being detached after the brazing work, and the tool may be detached after the plural cylindrical pipes have been brazed and secured to each other.

Furthermore, the plural cylindrical pipes that become brazing targets are not particularly limited, and arbitrary plural cylindrical pipes that the air conditioner 1 has other than the plural intercommunicating pipes 25a to 25j of the present embodiment may also be brazed to each other.

### (8-2) Example Modification B

In the embodiment, a case where clad metal functioning as a brazing filler metal is provided on the surfaces of the plural intercommunicating pipes 25a to 25j and the surface of the clip 50 was taken as an example and described.

However, the plural cylindrical pipes that become brazing targets are not limited to pipes having a brazing filler metal provided on their surfaces in this way, and a brazing filler metal may also be obtained from arbitrary targets other than the plural cylindrical pipes that become brazing targets.

### REFERENCE SIGNS LIST

- 1: Air Conditioner
- 9: Bundling Component
- 20: Outdoor Heat Exchanger (Heat Exchanger)
- 24: Return Header (Header)
- 25: Intercommunicating Component
- 25a to 25j: Intercommunicating Pipes (Plurality of Cylindrical Pipes)
- 26: Inlet/Outlet Header
- 40: Band Member
- 41: Main Body Portion
- 42: Anchoring Hole
- 43: Band Portion
- 50: Clip

## Claims

1. An air conditioner (1) comprising a heat exchanger (20) comprising a plurality of cylindrical pipes (25a to 25j) made of aluminum or aluminum alloy and a header (24), wherein
the cylindrical pipes extend in a same direction, and
the cylindrical pipes intercommunicate spaces vertically plurally divided inside the header,
**characterized in that** the cylindrical pipes are brazed to each other at their cylinder-shaped outer peripheries.

2. The air conditioner according to claim 1, wherein at least three or more of the cylindrical pipes are brazed.

3. The air conditioner according to claim 1 or 2, wherein a film functioning as a sacrificial material and as a brazing filler metal is provided on outer surfaces of the cylindrical pipes.

## Patentansprüche

1. Klimaanlage (1), umfassend einen Wärmetauscher (20), umfassend eine Vielzahl von zylindrischen Rohren (25a bis 25j), die aus Aluminium oder Aluminiumlegierung hergestellt sind, und ein Sammelrohr (24), wobei
sich die zylindrischen Rohre in einer gleichen Richtung erstrecken, und
die zylindrischen Rohre Räume, die vertikal mehrfach im Inneren des Sammelrohrs unterteilt sind, in gegenseitige Verbindung setzen,
**dadurch gekennzeichnet, dass** die zylindrischen Rohre an deren zylindrisch gestalteten Außenumfängen miteinander hartgelötet sind.

2. Klimaanlage nach Anspruch 1, wobei mindestens drei oder mehr der zylindrischen Rohre hartgelötet sind.

3. Klimaanlage nach Anspruch 1 oder 2, wobei eine Folie, die als ein Opfermaterial und als ein Hartverlötungs-Zusatzmetall fungiert, an Außenflächen der zylindrischen Rohre bereitgestellt ist.

## Revendications

1. Climatiseur (1) comprenant un échangeur de chaleur (20) comprenant une pluralité de tuyaux cylindriques (25a à 25j) en aluminium ou alliage d'aluminium et un collecteur (24), dans lequel
les tuyaux cylindriques s'étendent dans une même direction, et
les tuyaux cylindriques assurent l'intercommunication entre des espaces divisés plusieurs fois verticalement à l'intérieur du collecteur,
**caractérisé en ce que** les tuyaux cylindriques sont brasés les uns aux autres au niveau de leurs périphéries externes en forme de cylindre.

2. Climatiseur selon la revendication 1, dans lequel au moins trois des tuyaux cylindriques ou plus sont brasés.

3. Climatiseur selon la revendication 1 ou 2, dans lequel un film fonctionnant comme un matériau sacrificiel et comme un métal d'apport de brasage est prévu sur des surfaces externes des tuyaux cylindriques.
